# EUROPÄISCHE PATENTANMELDUNG

(11) **EP 3 670 180 A1**
(43) Veröffentlichungstag der Anmeldung: **24.06.2020**
(21) Anmeldenummer: 18212886.8
(22) Anmeldetag: 17.12.2018
(51) Int. Cl.: B32B 27/08, B32B 27/36, B32B 27/40, B32B 27/30, B32B 27/18

(54) **MULTISCHICHTSYSTEM AUS MINDESTENS 3 POLYESTERSCHICHTEN, DESSEN HERSTELLUNG UND VERWENDUNG**

(71) Anmelder: LANXESS Deutschland GmbH, 50569 Köln (DE)
(72) Erfinder: LAUFER, Wilhelm, 67158 Ellerstadt (DE)

(57) **Zusammenfassung**

Die vorliegende Erfindung betrifft ein Multischichtsystem aus mindestens 3 Polyesterschichten, dessen Herstellung und Verwendung zur Herstellung von Verpackungen, Schutzfolien, Klebstofffolien, Solarzellen oder medizinischen Materialien und sowie daraus hergestellte Solarzellen.

## Beschreibung

Die vorliegende Erfindung betrifft ein Multischichtsystem aus mindestens 3 Polyesterschichten, dessen Herstellung und Verwendung zur Herstellung von Verpackungen, Schutzfolien, Klebstofffolien, Solarzellen oder medizinischen Materialien sowie daraus hergestellte Solarzellen.

Polyesterfolien finden vielfältige Anwendungsmöglichkeiten, u.a. in Solarzellen. Problematisch ist hier häufig deren fehlende Hydrolysestabilität (WO2010113920). Diverse Carbodiimide haben sich beim als Hydrolyseschutz für thermoplastische Kunststoffe bewährt. Sie haben allerdings den Nachteil, dass sie bei der Verarbeitung gesundheitsbedenkliche Gase emittieren. Besonders problematisch ist dabei der Herstellungsschritt der Folienstreckung, da hier keine effizienten Absaugvorrichtungen eingesetzt werden können.

Die Emission der teilweise gasförmigen Isocyanate beim Herstellungsprozess der Polymerfolien ist gesundheitsschädlich und erfordert daher die Installation umfangreicher und teurer Absaugvorrichtungen, die teilweise technisch nicht anwendbar sind (EP-A-0 838 500).

Polyesterfolien mit epoxidierten Pflanzenölen als Stabilisator sind in EP-A-1 634 914 und EP-A-1 842 871 beschrieben. Hier treten die für Carbodiimide typischen toxischen Abbauprodukte nicht auf, die Einbindung in die Polyestermatrix ist bei geeigneter Auswahl der Öle gut, und es kommt zu einem Hydrolyseschutz der Folie, der allerdings nur in hohen Konzentrationen des Epoxids erreicht werden kann, bei einer schlechteren Langzeitstabiliserung im Vergleich zu einer Verwendung von Carbodiimiden. Als Nachteile treten weiterhin bei dieser Anwendung in der Produktion immer wieder Produktionsintervalle mit extremer Neigung zur Gelbildung auf. Wenn das Gel-Level zu hoch wird, kommt es zu Abrissen und eine Produktion der Folie wird zeitweilig unmöglich. Die Produktion muss dann unterbrochen und die Extrusion gereinigt werden.

Es bestand daher Bedarf nach einem System aus Polyesterschichten, insbesondere für Folien, bei der die Emission von Isocyanaten bei der Verarbeitung, deutlich vermindert wird und die einen sehr guten Langzeit-Hydrolyseschutz aufweisen.

Überraschenderweise wurde nun gefunden, dass ein Multischichtsystem aus mindestens 3 Polyesterschichten, bei dem die innenliegende Polyesterschicht Carbodiimide enthält, und die auf der Ober- und der Unterseite von weiteren Polyesterschichten umhüllt wird, von der zumindest eine Epoxid enthält, hydrolysestabil ist und eine deutlich reduzierte Isocyanatemission bei der Verarbeitung aufweist.

Gegenstand der vorliegenden Erfindung ist ein Multischichtsystem aus mindestens 3 Polyesterschichten, die folgenden Aufbau aufweisen:
- mindestens eine Polyesterschicht (I) enthaltend mindestens ein Carbodiimid,
- mindestens eine Polyesterschicht (II) auf Oberseite der Polyesterschicht (I) und
- mindestens eine Polyesterschicht (III) auf der Unterseite der Polyesterschicht (I),
wobei mindestens eine dieser Polyesterschichten (II) oder (III) mindestens ein Epoxid enthält.

Bei den Carbodiimiden handelt es sich bevorzugt um Verbindungen der Formel (I)

R¹-R²-(-N=C=N-R²-)ₙ-R¹ (I),

in der
n einer ganzen Zahl von 1 bis 500, bevorzugt 3 bis 20, ganz besonders bevorzugt 4 bis 20 entspricht,
R¹ für einen Rest der Reihe -NCO, -NCNR³-NHCONHR³, -NHCONR³R⁴ oder -NHCOOR⁵ steht, wobei R³ und R⁴ gleich oder verschieden sind und jeweils unabhängig für einen Rest der Reihe C₁-C₁₂-Alkyl-, C₆-C₁₂-Cycloalkyl-, C₇-C₁₈-Aralkyl- oder C₆-C₁₈-Arylrest stehen und R⁵ für einen Rest der Reihe C₁-C₂₂-Alkyl-, C₆-C₁₂-Cycloalkyl-, C₆-C₁₈-Aryl oder C₇-C₁₈-Aralkyl-, sowie für einen ungesättigten Alkylrest mit 2 - 22 Kohlenstoffatomen oder für einen Alkoxypolyoxyalkylenrest steht,
R² für C₁-C₁₂-Alkyl-substituierte C₆-C₁₈-Arylene, C₇-C₁₈-Alkylaryl-substituierte C₆-C₁₈-Arylene sowie gegebenenfalls für C₁-C₁₂-Alkyl-substituierte über C₁-C₈-Alkylengruppen verbrückte Arylene, die in Summe 7 bis 30 Kohlenstoffatome aufweisen, sowie Arylen steht, vorzugsweise 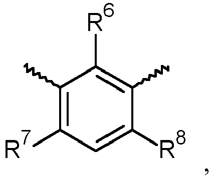
worin R⁶, R⁷ und R⁸ jeweils unabhängig voneinander für Methyl- oder Ethyl stehen, wobei jeder Benzolring nur eine Methyl-Gruppe aufweist.

Besonders bevorzugte Carbodiimide sind Verbindungen der Formel (II), 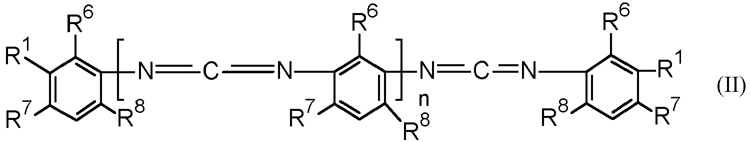
bei denen R¹ ausgewählt ist aus der Gruppe -NCO, -NHCONHR³, -NHCONR³R⁴ oder -NHCOOR⁵,
wobei R³ und R⁴ gleich oder verschieden sind und einen C₁-C₁₂-Alkyl-, C₆-C₁₂-Cycloalkyl-, C₇-C₁₈-Aralkylrest- oder C₆-C₁₈-Arylrest darstellen,
R⁵ einem C₁-C₂₂-Alkyl-, C₆-C₁₂-Cycloalkyl-, C₆-C₁₈-Aryl- oder C₇-C₁₈-Aralkylrest, sowie einem ungesättigten Alkylrest mit 2 - 22 Kohlenstoffatomen, bevorzugt 12 - 20 Kohlenstoffatomen, besonders bevorzugt 16 - 18 Kohlenstoffatomen, oder einem Alkoxypolyoxyalkylenrest entspricht, und
R⁶, R⁷ und R⁸ jeweils unabhängig voneinander für Methyl oder Ethyl stehen, wobei jeder Benzolring nur eine Methyl-Gruppe aufweist und n = 1 bis 20 bedeutet.

Der Carbodiimid-Gehalt (NCN-Gehalt, gemessen durch Titration mit Oxalsäure) der erfindungsgemäß eingesetzten Carbodiimide der Formel (I), vorzugsweise der Formel (II) liegt vorzugsweise bei 2 - 16 Gew.%, bevorzugt bei 4 - 13 Gew.%, besonders bevorzugt bei 6 - 12 Gew.%.

Die erfindungsgemäß eingesetzten Carbodiimide der Formel (I), vorzugsweise der Formel (II), weisen darüber hinaus vorzugsweise eine mittels GPC-Viskosimetrie zu bestimmende mittlere Molmasse (Mw) von 1000 - 20000 g/mol, bevorzugt 1500 - 10000 g/mol, besonders bevorzugt 2000 - 5000 g/mol auf.

Physikalische, mechanische und rheologische Eigenschaften werden oft durch die Polymolekularität (das Verhältnis von Gewichtsmittel zu Zahlenmittel) bestimmt. Dieses Verhältnis wird auch Polydispersität genannt und ist ein Maß für die Breite einer Molmassenverteilung (MMV). Erfindungsgemäß bevorzugt sind Carbodiimide der Formel (II), die eine mittels Gelpermeations-Chromatografie (GPC) bestimmte Polydispersität D von und Mw/Mn im Bereich von 1,2 bis 2,2, besonders bevorzugt im Bereich von 1,4 bis 1,8 aufweisen.

Bei den erfindungsgemäß eingesetzten Carbodiimiden handelt es sich um kommerziell verfügbare Verbindungen, wie z.B. die polymeren Carbodiimiden mit dem Namen Stabaxol® der Firma Lanxess Deutschland GmbH. Sie können aber auch beispielsweise nach den in der EP-A-3018124 beschriebenen Verfahren hergestellt werden.

Bei den Polyesterschichten (I), (II) und/oder (III) handelt es sich vorzugsweise um Schichten aus thermoplastischem Polyester. Bevorzugte Polyester im Sinne der Erfindung sind vorzugsweise Polyalkylterephthalate, bevorzugt um Polyethylenterephthalat (PET), Polybutylenterephthalat (PBT), Polybutylenadipat-Terephthalaten (PBAT), Polytrimethylenterephthalat (PTT), sowie deren Copolyester, thermoplastische Polyester-Elastomere (TPE E), Ethylenvinylacetat (EVA), Polymilchsäure (PLA) und/oder PLA-Derivate, Polybutylensuccinate (PBS), Polyhydroxyalkanoate (PHA), sowie verschiedene Blends und/oder polyesterbasierte thermoplastische Polyurethane (TPU).

Besonders bevorzugt werden als Polyesterschichten (I), (II) und (III) unabhängig voneinander Polyalkylterephthalate, wie insbesondere bevorzugt Polyethylenterephthalat, Polybutylenterephthalat oder Polybutylenadipat-Terephthalaten und Polylactide (PLA) und deren Copolyester eingesetzt.
Die Polyesterschichten (I), (II) und (III) im Multischichtsystem können dabei aus dem gleichen Polyester bestehen oder aber auch aus unterschiedlichen Polyestern.

Bei den Epoxiden handelt es sich vorzugsweise um Verbindungen auf Basis von Molekülen mit zwei oder mehr Epoxid-Gruppen pro Molekül. Vorzugsweise handelt es sich dabei um wenigstens ein epoxidiertes natürliches Öl, oder um wenigstens einen epoxidierten Fettsäureester oder um wenigstens eine synthetische epoxidierte Verbindung. Besonders bevorzugt haben die erfindungsgemäß einzusetzenden Epoxide wenigstens eine endständige Epoxid-Gruppe von insgesamt mindestens zwei Epoxid-Gruppen pro Molekül.

Als Epoxide werden auch epoxidierte natürliche Öle oder epoxidierte Fettsäureester bevorzugt eingesetzt.

Bevorzugte epoxidierte natürliche Öle basieren auf wenigstens einem Öl aus der Gruppe Olivenöl, Leinöl, Erdnussöl, Palmöl, Sojabohnenöl und Lebertran. Besonders bevorzugt ist Leinöl oder Sojabohnenöl, ganz besonders bevorzugt Leinöl.

Epoxidierte natürliche Öle werden im Allgemeinen nach den für einen Fachmann geläufigen Methoden hergestellt, wie dies z.B. aus der Angew. Chem. 2000, 112, 2292 - 2310 bekannt ist.

Bevorzugte epoxidierte Fettsäureester erhält man aus ungesättigten aliphatischen Carbonsäuren mit 10 bis 40 C-Atomen, bevorzugt mit 16 bis 22 C-Atomen, durch Umsetzung mit aliphatischen gesättigten Alkoholen mit 2 bis 40 C-Atomen, vorzugsweise 2 bis 6 C-Atomen und anschließender Umsetzung mit Peroxiden, vorzugsweise Wasserstoffperoxid.

Vorzugsweise werden die epoxidierten Fettsäureester durch Umsetzung von ein- oder zweiwertige ungesättigten Carbonsäuren mit aliphatischen gesättigten Alkoholen hergestellt. Besonders bevorzugt wird als ein- oder zweiwertige Carbonsäure wenigstens eine Carbonsäure aus der Gruppe Pelargonsäure, Palmitinsäure, Laurinsäure, Margarinsäure, Dodecandisäure, Behensäure, Stearinsäure, Caprinsäure, Montansäure, Linolsäure, Linolensäure und Ölsäure eingesetzt und anschließender Umsetzung mit Peroxiden, vorzugsweise Wasserstoffperoxid.

Vorzugsweise einzusetzende aliphatische gesättigte Alkohole sind 1- bis 4-wertige Alkohole, ausgewählt aus der Gruppe n-Butanol, n-Octanol, Stearylalkohol, Ethylenglykol, Propylenglykol, Neopentylglycol, Pentaerythrit und Glycerin. Insbesondere bevorzugt ist Glycerin.

Es können auch Mischungen verschiedener epoxidierter Fettsäureester und/oder epoxidierter natürlicher Öle eingesetzt werden.

Es können aber ebenfalls synthetische epoxidierte Verbindungen, wie z.B. auch aromatische epoxidierte Polymere oder Kondensationsprodukte eingesetzt werden. Diese werden beispielsweise durch Umsetzung von aromatischen Alkoholen mit Formaldehyd hergestellt, die anschließend mit Peroxiden umgesetzt werden. Als aromatische Alkohole können insbesondere ein- oder mehrkernige Phenole verwendet werden.

Bevorzugte einkernige Phenole sind Resorcin oder Hydrochinon.

Bevorzugte mehrkernige Phenole sind Bis-(4-hydroxyphenyl)-methan, 2,2-Bis-(4-hydroxyphenyl)-propan, 2,2-Bis-(3,5-dibrom-4-hydroxyphenyl)-propan oder 4,4'-Dihydroxydiphenylsulfon.

Bevorzugte Kondensationsprodukte von Phenolen mit Formaldehyd sind Phenol-Novolake.

In einer weiteren bevorzugten Ausführungsform der Erfindung werden aromatische Epoxid-Verbindungen mit zwei endständige Epoxid-Funktionen eingesetzt. Bei diesen handelt es sich vorzugsweise um ein oligomeres Reaktionsprodukt aus Bisphenol A mit Epichlorhydrin mit einem gemäß EN ISO 10927 ermitteltem mittleren Molekulargewicht von 900 bis 1200 g/mol und einem nach ISO 3001 ermitteltem Epoxy-Index von 450 bis 600 Gramm pro Äquivalent. Besonders bevorzugt wird dabei das Reaktionsprodukt der Formel (III) aus der Umsetzung von Bisphenol A mit Epichlorhydrin eingesetzt, 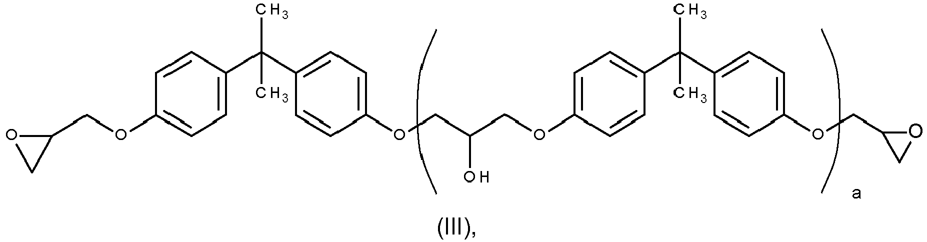 worin a für eine durchschnittliche Zahl von 0 bis 10, vorzugsweise 1 bis 8, besonders bevorzugt 1 bis 6, ganz besonders bevorzugt 2 bis 3 steht..

Vorzugsweise werden die Epoxide nach einem Verfahren gemäß US2002/0128428 A1 hergestellt und weisen dann gemäß EN ISO 10927 ein mittleres Molekulargewicht von 900 bis 1200 g/mol auf, was in der Formel (III) einem a im Bereich von 2 bis 3 entspricht, mit einem nach ISO 3001 bestimmten Epoxy-Index von 450 bis 600 Gramm pro Äquivalent.

Bevorzugt eingesetzt werden synthetische Epoxid-Verbindungen mit einen Erweichungspunkt nach Mettler gemäß DIN 51920 im Bereich von 0 bis 150°C, besonders bevorzugt 50°C bis 120°C, ganz besonders bevorzugt im Bereich von 60°C bis 110°C und insbesondere im Bereich von 75°C bis 95°C. Der Erweichungspunkt nach Mettler ist die Temperatur, bei der die Probe aus einem zylindrischen Nippel mit einer Ausflussöffnung von 6,35 mm Durchmesser ausfließt, wobei sie eine 19 mm tiefer liegende Lichtschranke unterbricht. Zu diesem Zweck wird die Probe an Luft unter konstanten Bedingungen aufgeheizt.

Vorzugsweise eingesetzt werden synthetische Epoxid-Verbindungen, die ein mittleres Epoxidäquivalent-Gewicht (EEW, Gramm Harz die ein Mol epoxidisch gebundenen Sauerstoff enthalten) via Titration gemäß DIN 16945 von 160 bis 2000 g/eq, bevorzugt 250 bis 1200 g/eq, besonders bevorzugt 350 bis 1000 g/eq und insbesondere bevorzugt im Bereich von 450 bis 800 g/eq aufweisen.

Insbesondere bevorzugt wird als Verbindung der Formel (III) ein Poly(Bisphenol A-co-Epichlorhydrin) [CAS Nr. 25068-38-6] eingesetzt, vorzugsweise mit einem durch MALDI-TOF-Massenspektrometrie durch matrixunterstützte Laser-Desorptions/lonisations-Flugzeit-Massenspektrometrie gemäß EN ISO 10927 zu bestimmenden zahlenmittleren Molekulargewicht (Mₙ) im Bereich von 600 bis 1800 g/mol, zu beziehen als Epilox® von Leuna Harze GmbH, Leuna.

Weitere bevorzugte Epoxid-Verbindungen mit mindestens 2 Epoxid-Funktionen sind kommerziell verfügbar unter dem Namen Joncryl® der Fa. BASF AG, insbesondere Joncryl® 4368, die folgende Einheiten in beliebiger Kombination enthalten 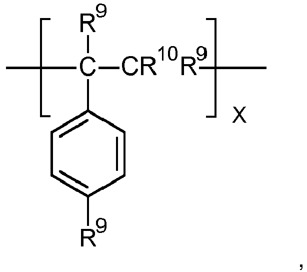 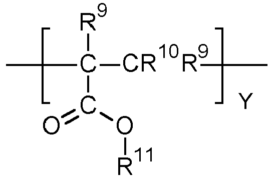 und

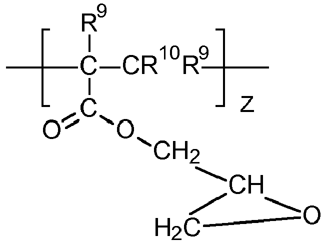

In den dargestellten Einheiten stehen R⁹, R¹⁰ jeweils unabhängig voneinander für H oder C₁-C₈-Alkyl, R¹¹ steht für C₁-C₈-Alkyl, x sowie y stehen unabhängig voneinander für eine durchschnittliche Zahl von 1 bis 20, und z steht für eine durchschnittliche Zahl von 2 bis 20. Den Kettenabschluß bilden Endgruppen R* die unabhängig voneinander für H oder C₁-C₈ -Alkyl stehen.

Bevorzugt entspricht das Epoxid der Formel (IV) 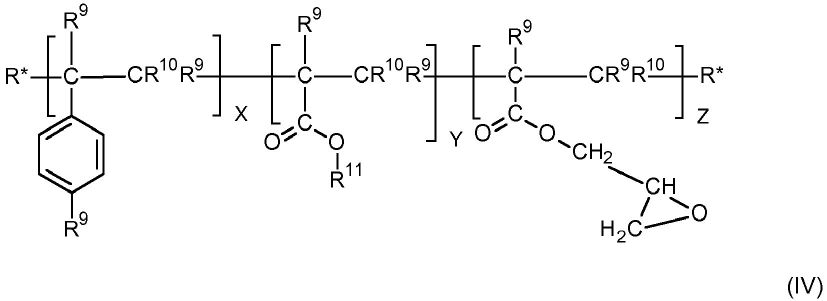 worin R⁹, R¹⁰ jeweils unabhängig voneinander für H oder C₁-C₈-Alkyl stehen, R¹¹ für C₁-C₈-Alkyl steht, x und y unabhängig voneinander für eine durchschnittliche Zahl von 1 bis 20 stehen und z für eine durchschnittliche Zahl von 2 bis 20 steht, wobei die Endgruppen R* unabhängig voneinander für H oder C₁-C₈ -Alkyl stehen.

In einer bevorzugten oder alternativen Ausführungsform werden als Epoxide epoxidierte Fettsäureester des Glycerins, insbesondere epoxidierte Pflanzenöle, eingesetzt. Diese werden durch Epoxidierung der reaktionsfähigen Olefingruppen von Triglyceriden ungesättigter Fettsäuren erhalten. Die Herstellung epoxidierter Fettsäureester des Glycerins kann ausgehend von ungesättigten Fettsäureestern des Glycerins, bevorzugt von Pflanzenölen und organischen Peroxycarbonsäuren (Prileschajew-Reaktion). erfolgen. Verfahren zur Herstellung epoxidierter natürlicher Öle sind zum Beispiel in Smith, March, March's Advanced Organic Chemistry, 5. Auflage, Wiley-Interscience, New York, 2001 beschrieben. Bevorzugte epoxidierte Fettsäureester des Glycerins sind epoxidierte natürliche Öle, besonders bevorzugt epoxidiertes Sojaöl [CAS Nr. 8013-07-8].

Der Anteil der Polyesterschicht (I) im erfindungsgemäßen Multischichtensystem liegt im Allgemeinen zwischen 10 Gew. % und 99 Gew. %, bevorzugt zwischen 30 Gew.-% und 90 Gew.-%, besonders bevorzugt liegt der Anteil der Polyesterschicht (I) im erfindungsgemäßen Multischichtensystem zwischen 50 Gew.-% bis Gew. 70 %, bezogen auf das Gesamtgewicht des Multischichtsystems.

Bevorzugt enthalten die Polyesterschichten (II) und (III) ein Epoxid. Des Weiteren in bevorzugt, dass die Polyesterschichten (II) und (III) kein Carbodiimid enthalten.

In einer bevorzugten Ausführungsform der Erfindung beträgt die Menge an Carbodiimid in der Polyesterschicht (I) 0,2 bis 3 Gew.-%, bevorzugt 0,5 bis 1,5 Gew.-%, bezogen auf die Polyesterschicht (I) beträgt.

In einer weiteren bevorzugten Ausführungsform der Erfindung beträgt die Menge an Epoxiden in zumindest einer der Polyesterfolien (II) und/oder (III) 0,1 bis 6 Gew.-%, bevorzugt 0,5 bis 4 Gew.-%, bezogen auf die Polyesterschicht (II) oder Polyesterschicht (III) beträgt.

In einer bevorzugten Ausführungsform der Erfindung beträgt Gewichtsmenge der Carbodiimid-haltigen Polyesterschicht (I) 70 Gew. % bis 95 Gew.%, bezogen auf das Gesamtgewicht des Multischichtsystems.

In einer weiteren bevorzugten Ausführungsform der Erfindung liegt die Dicke der Polyesterschicht bevorzugt zwischen 11 und 500 Mikrometer und besonders bevorzugt zwischen 24 und 300 Mikrometer.

In mehrschichtigen Ausführungsformen der Carbodiimid-haltigen Schicht ist die Summe der Dicken der Carbodiimid-haltigen Schichten üblicherweise größer als 10 Mikrometer und kleiner als 500 Mikrometer und besonders bevorzugt größer als 40 Mikrometer und kleiner als 300 Mikrometer.

Polyesterschicht (II) und/oder Polyesterschicht (III) werden bevorzugt dünn ausgeführt, um die Hydrolysestabilität der Gesamtfolie so wenig wie möglich zu beeinträchtigen, d.h. diese Schichten sind bevorzugt jeweils dünner als 5 Mikrometer, besonders bevorzugt dünner als 3 Mikrometer und idealerweise dünner als 0,8 Mikrometer. Es hat sich jedoch als günstig erwiesen, wenn Polyesterschicht (II) und/oder Polyesterschicht (III) nicht dünner als 0,1 Mikrometer sind.

Ein weiterer Gegenstand der vorliegenden Erfindung ist zudem ein Verfahren zur Herstellung des Multischichtsystems, dadurch gekennzeichnet, dass die carbodiimid-haltige Polyesterschicht (I), die gegebenenfalls Epoxid-haltigen Polyesterschichten (II) und (III) zu einem Multischichtsystem coextrudiert werden.

Coextrusionsverfahren sind aus dem Stand der Technik bekannt. Demzufolge können auch die üblichen im Rahmen der Coextrusion eingesetzten Temperaturen und Drücke im Herstellungsverfahren des erfindungsgemäßen Multischichtsystems eingesetzt werden. Die Temperaturen liegen vorzugsweise bei 200 bis 300°C.

Bevorzugt erfolgt dieses Verfahren in der Art, dass aus der Polyesterschicht (I) und Polyesterschicht (II) und (III) mittels Co-Extrusion unter Einsatz von mindestens zwei Extrudern gegebenenfalls unter Zugabe von Haftvermittlern, das erfindungsgemäße Multischichtsystem hergestellt wird.

Insbesondere bei der Extrusion der Polyesterschicht (I) kann es durch die Zersetzung des Carbodiimids zur Bildung von Isocyanten kommen. Bei diesem Verfahren wird vorzugsweise bei der Extrusion eine Breitschlitzdüse zur Herstellung der Polyesterschicht eingesetzt. In einer bevorzugten Variante des erfindungsgemäßen Herstellungsverfahrens werden Absaugvorrichtungen an der Breitschlitzdüse angebracht.

Zur Herstellung der Polyesterschicht (I) wird der Polyester mit dem Carbodiimid versetzt und extrudiert.

Zur Herstellung der Polyesterschichten (II) und (III) wird zumindest zu einem der Polyester das Epoxid beider Extrusion zugegeben. Dabei können gängige Dosiersysteme verwendet werden.

Die Polyesterschicht (I) wird dann mit Polyesterschichten (II) und (III) so extrudiert, dass diese die Polyesterschicht (I) von den Polyesterschichten (II) und (III) auf der gegenüberliegenden Seite umgeben ist.

Bei dem Verfahren zur Herstellung der Schichten des erfindungsgemäßen Multischichtsystems wird vorzugsweise so vorgegangen, dass die entsprechenden Polyester-Schmelzen modifiziert mit dem Carbodiimid der Formel (I) für Polyesterschicht (I) bzw. modifiziert mit Epoxid für die Polyesterschicht (II) und/oder (III) durch eine Flachdüse extrudiert werden, die so erhaltene Schicht zur Verfestigung auf einer oder mehreren Walze/n, vorzugsweise eine Kühlwalze als weitgehend amorphe Vorschicht abgezogen und abgeschreckt wird, optional die Schicht anschließend erneut erhitzt, und vorzugsweise biaxial verstreckt (orientiert) und die biaxial verstreckte Schicht thermofixiert wird. Sie erhält so vorzugsweise eine Folienform. Im Bereich der Extrusion hat es sich dabei als günstig erwiesen, wenn Temperaturen von 295 °C nicht überschritten werden.

Besonders günstig ist es, wenn der Bereich der Düse und speziell der Bereich der Düsenlippe und nahe daran nicht wärmer als 290 °C, bevorzugt nicht wärmer als 285 °C und besonders bevorzugt nicht wärmer als 275 °C, ist. Je höher die Temperatur ist, desto höher ist der thermische Stress auf die Stabilisatoren und desto höher die Neigung zur Gelbildung.

Die biaxiale Verstreckung wird im Allgemeinen sequentiell durchgeführt. Dabei wird vorzugsweise erst in Längsrichtung (d.h. in Maschinenrichtung = MD-Richtung) und anschließend in Querrichtung (d.h. senkrecht zur Maschinenrichtung = TD-Richtung) verstreckt. Dies führt zu einer Orientierung der Molekülketten. Das Verstrecken in Längsrichtung lässt sich mit Hilfe zweier entsprechend dem angestrebten Streckverhältnis verschieden schnell laufender Walzen durchführen.

Die Temperatur, bei der die Verstreckung durchgeführt wird, kann in einem relativ großen Bereich variieren und richtet sich nach den gewünschten Eigenschaften der Schicht. Im Allgemeinen wird die Längs- und auch die Querstreckung bei Tg + 10 °C bis Tg + 60 °C (Tg = Glastemperatur der Schicht) durchgeführt. Das Längsstreckverhältnis liegt allgemein im Bereich von 2,0:1 bis 6:1, vorzugsweise 3:1 bis 4,5:1. Das Querstreckverhältnis liegt allgemein im Bereich von 2:1 bis 5:1, vorzugsweise 3:1 bis 4,5:1, und das einer gegebenenfalls durchgeführten zweiten Längs- und Querstreckung liegt bei 1,1:1 bis 5:1.

Die Längsstreckung kann gegebenenfalls gleichzeitig mit der Querstreckung (Simultanstreckung) durchgeführt werden. Als besonders günstig hat es sich dabei erwiesen, wenn das Streckverhältnis in Längs- und Querrichtung jeweils größer als 3,0 ist.

Bei der nachfolgenden Thermofixierung wird die Schicht vorzugsweise etwa 0,1 bis 10 s lang bei einer Temperatur von 150 bis 260°C, vorzugsweise 200 bis 245°C, gehalten. Anschließend an, beziehungsweise beginnend in der Thermofixierung, wird die Schicht um 0 bis 15 %, vorzugsweise um 1,5 bis 8 %, in Quer- und gegebenenfalls auch in Längsrichtung relaxiert und die Schicht dann in üblicher Weise abgekühlt und aufgewickelt.

Ein weiterer Gegenstand der vorliegenden Erfindung ist zudem die Verwendung des erfindungsgemäßen Multischichtsystems zur Herstellung von Verpackungen, Schutzfolien, wie vorzugsweise für Solarzellen oder im medizinischen Bereich oder zur Herstellung von Klebstofffolien.

Bevorzugt wird das erfindungsgemäße Multischichtsystem zur Herstellung als Schutzfolien für Solarzellen eingesetzt. Daher umfasst die vorliegende Erfindung ebenfalls Solarzellen, die das Multischichtsystem enthalten.

In der vorliegenden Erfindung wird das erfindungsgemäße Multischichtsystem in Solarzellen als Rückseitenfolie eingesetzt. Dabei ist das erfindungsgemäße Multischichtsystem für allen im Stand der Technik bekannten Solarzellen einsetzbar.

Die Herstellung der Solarzelle erfolgt dabei nach den in dem Stand der Technik beschriebenen Verfahren, ausgehend von den Standardverfahren zur Herstellung von Silizium über Gießverfahren, Bridgeman Verfahren, EFG (edgedefined film-fed growth)- Verfahren oder dem Czochralski-Verfahren und der nachfolgenden Herstellung der Si-Wafer und dem Aufeinanderschichten der vorgenannten Materialschichten, wobei anstelle der standardmäßig eingesetzten Rückseitenfolie das erfindungsgemäße Multischichtsystem eingesetzt wird.

Der Rahmen der Erfindung erfasst alle oben stehenden und im Folgenden aufgeführten allgemeinen oder in Vorzugsbereichen genannten Restedefinitionen, Indizes, Parameter und Erläuterungen untereinander, also auch zwischen den jeweiligen Bereichen und Vorzugsbereichen in beliebiger Kombination.

Durch das erfindungsgemäße Multischichtsystem kann erstmals ein hydrolysestabilisiertes Polyester-Mehrschichtensystem bereitgestellt werden.

Die nachfolgenden Beispiele dienen der Erläuterung der Erfindung, ohne dabei limitierend zu wirken.

### Beispiele

### Beispiel 1

### Getestet wurden:

1) Carbodiimid A: ein polymeres Carbodiimid mit einem NCN-Gehalt von ca. 11,8 Gew.% , D = ca. 1,8 und Mw = 2300 g/mol der Formel (II) mit n = ca. 3 - 4, R⁶, R⁷, R⁸ jeweils unabhängig für Methyl- oder Ethyl steht, wobei jeder Benzolring nur eine Methyl-Gruppe aufweist und R¹ = - NHCOOR⁵ und R⁵ = Cyclohexyl.
2) Carbodiimid-Masterbatch B: Polyethylentheraphthalat (PET), erhältlich bei der Firma Invista Deutschland GmbH mit einer intrinsischen Viskosität von 0,8, welches mit 10 Gew.% Carbodiimid A versetzt und extrudiert wird.
3) Stabilisator C: Epoxid der Formel ein Epoxid der Formel (III) mit n = im Bereich von 2 - 3 mit einem Epoxidäquivalent-Gewicht (DIN 16945) von 500 bis 700 g/eq und einem Erweichungspunkt (Mettler, DIN 51920) zwischen 75 und 90°C. [CAS Nr. 25068-38-6]..
4) Polyethylenterephthalat (PET), erhältlich bei der Firma Invista Deutschland GmbH mit einer intrinsischen Viskosität von 0,8.

Die in Tabelle 1 aufgeführten Multischichtsysteme wurden mit Hilfe eines Extruders für die innenliegende Polyesterschicht (I) und eines Co-Extruders für die äußeren Polyesterschichten (II) und (III) unter Einsatz von Polyethylenteraphthalat als Polyester hergestellt. An der Breitschlitzdüse wurde eine Absaugung angebracht. In der Tabelle 1 sind die Einsatzmengen sowie die Ergebnisse der qualitativen Emissionsmessung im Bereich der Streckung unter Verwendung von standardisierten Indikatorröhrchen für Isocyanate (Messdauer ca. 30 min.) und die Hydrolysestabilität der PET-Schichten zusammengefasst.

### Messung der Hydrolysestabilität

Für den Hydrolysetest wurden die Schichten in Wasserdampf bei einer Temperatur von 120°C für 24 Stunden gelagert und deren Bruchdehnung nach 0 und 24 Stunden gemessen. Die in Tabelle 1 angegebenen Werte für Hydrolysestabilität ergeben sich aus der folgenden Berechnung: Bruchdehnung [%] = (Bruchdehnung nach 24 Stunden / Bruchdehnung nach 0 Stunden) x 100.

**Tabelle 1:**

| | Zusammensetzung Polyesterschicht (I) | Zusammensetzung Polyesterschicht (II) und (III) | Prüfung Isocyanat | Hydrolysestabilität (Bruchdehnung in %) |
|---|---|---|---|---|
| Vergleichsbeispiel | 100 Gew. % PET | 100 Gew. % PET | negativ | 38 |
| Vergleichsbeispiel in Analogie zu EP0838500 | 15 Gew. % Carbodiimid-Masterbatch B / 85 Gew. % PET | 15 Gew. % Carbodiimid-Masterbatch B / 85 Gew. % PET | positiv | 95 |
| Vergleichsbeispiel in Analogie zu EP1634914 | 4 Gew.% Stabilisator C, 96 Gew. % PET | 4 Gew.% Stabilisator C, 96 Gew. % PET | negativ | 36 |
| Erfindungsgemäßes Beispiel | 15 Gew. % Carbodiimid-Masterbatch B / 85 Gew. % PET | 0,5 Gew.% Stabilisator C, 99,5 Gew. % PET | negativ | 91 |

Das erfindungsgemäße Beispiel zeigt den positiven Effekt des erfindungsgemäßen Multischichtsystems, da diese bei guter Hydrolysestabilität keinerlei Ausgasung von Isocyanat zeigt.

## Patentansprüche

1. Multischichtsystem aus mindestens 3 Polyesterschichten, die folgenden Aufbau aufweisen:
- mindestens eine Polyesterschicht (I) enthaltend mindestens ein Carbodiimid,
- mindestens eine Polyesterschicht (II) auf der Oberseite der Polyesterschicht (I) und
- mindestens eine Polyesterschicht (III) auf der Unterseite der Polyesterschicht (I), **dadurch gekennzeichnet, dass** mindestens eine dieser Polyesterschichten (II) oder (III) mindestens ein Epoxid enthält.

2. Multischichtsystem nach Anspruch 1, **dadurch gekennzeichnet, dass** es sich bei dem Carbodiimid um eine Verbindung der Formel (I)
R¹-R²-(-N=C=N-R²-)ₙ-R¹ (I)
handelt,
in der
n einer ganzen Zahl von 1 bis 500, bevorzugt 3 bis 20, ganz besonders bevorzugt 4 bis 20 entspricht,
R¹ für einen Rest der Reihe -NCO, -NCNR³, -NHCONHR³, -NHCONR³R⁴ oder -NHCOOR⁵ steht,
wobei R³ und R⁴ gleich oder verschieden sind und jeweils unabhängig für einen Rest der Reihe C₁-C₁₂-Alkyl-, C₆-C₁₂-Cycloalkyl-, C₇-C₁₈-Aralkyl- oder C₆-C₁₈-Arylrest stehen und R⁵ für einen Rest der Reihe C₁-C₂₂-Alkyl-, C₆-C₁₂-Cycloalkyl-, C₆-C₁₈-Aryl oder C₇-C₁₈-Aralkyl-, sowie für einen ungesättigten Alkylrest mit 2 - 22 Kohlenstoffatomen oder für einen Alkoxypolyoxyalkylenrest steht,
R² für C₁-C₁₂-Alkyl-substituierte C₆-C₁₈-Arylene, C₇-C₁₈-Alkylaryl-substituierte C₆-C₁₈-Arylene sowie gegebenenfalls für C₁-C₁₂-Alkyl-substituierte über C₁-C₈-Alkylengruppen verbrückte Arylene, die in Summe 7 bis 30 Kohlenstoffatome aufweisen, sowie Arylen steht, vorzugsweise 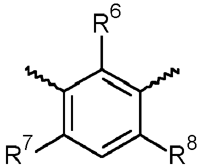
worin R⁶, R⁷ und R⁸ jeweils unabhängig voneinander für Methyl- oder Ethyl stehen, wobei jeder Benzolring nur eine Methyl-Gruppe aufweist.

3. Multischichtsystem nach Anspruch 1, **dadurch gekennzeichnet, dass** es sich bei den Carbodiimiden um Verbindungen der Formel (II) handelt, 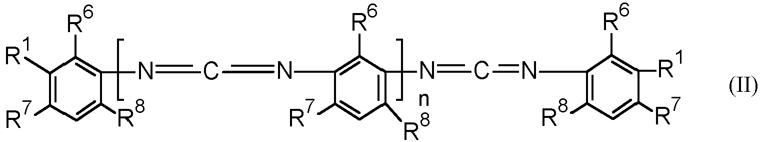
bei denen R¹ ausgewählt ist aus der Gruppe -NCO, -NHCONHR³, -NHCONR³R⁴ oder-NHCOOR⁵,
wobei R³ und R⁴ gleich oder verschieden sind und einen C₁-C₁₂-Alkyl-, C₆-C₁₂-Cycloalkyl-, C₇-C₁₈-Aralkylrest- oder einen C₆-C₁₈-Arylrest darstellen,
R⁵ einem C₁-C₂₂-Alkyl-, C₆-C₁₂-Cycloalkyl-, C₆-C₁₈-Aryl- oder C₇-C₁₈-Aralkylrest, sowie einem ungesättigten Alkylrest mit 2 - 22 Kohlenstoffatomen, bevorzugt 12 - 20 Kohlenstoffatomen, besonders bevorzugt 16 - 18 Kohlenstoffatomen, oder einem Alkoxypolyoxyalkylenrest entspricht, und
R⁶, R⁷ und R⁸ jeweils unabhängig voneinander für Methyl oder Ethyl stehen, wobei jeder Benzolring nur eine Methyl-Gruppe aufweist und n = 1 bis 20 bedeutet.

4. Multischichtsystem nach mindestens einem der Ansprüche 1 bis 3, **dadurch gekennzeichnet, dass** es sich bei der Polyesterschicht (I), (II) und/oder (III) um thermoplastischen Polyester handelt.

5. Multischichtsystem nach mindestens einem der Ansprüche 1 bis 4, **dadurch gekennzeichnet, dass** es sich bei dem Polyester um Polyethylenterephthalat (PET), Polybutylenterephthalat (PBT), Polybutylenadipat-Terephthalate (PBAT), Polytrimethylenterephthalat (PTT), sowie Copolyester, thermoplastische Polyester-Elastomere (TPE E), Ethylenvinylacetat (EVA), Polymilchsäure (PLA) und/oder PLA-Derivate, Polybutylensuccinate (PBS), Polyhydroxyalkanoate (PHA), sowie verschiedene Blends und/oderpolyesterbasierte thermoplastische Polyurethane handelt.

6. Multischichtsystem nach mindestens einem der Ansprüche 1 bis 5, **dadurch gekennzeichnet, dass** es sich bei den Epoxiden um Verbindungen auf Basis von Molekülen mit zwei oder mehr Epoxid-Gruppen pro Molekül handelt.

7. Multischichtsystem nach mindestens einem der Ansprüche 1 bis 6, **dadurch gekennzeichnet, dass** es sich bei den Epoxiden um eine Verbindung der Formel (IV) 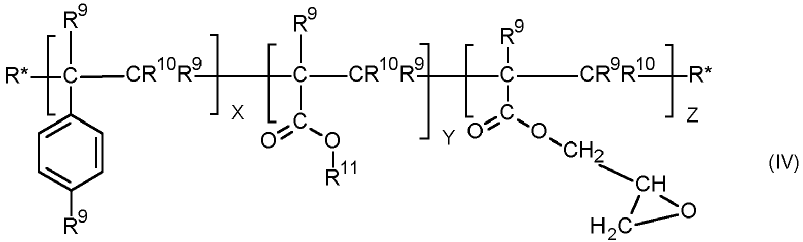 handelt,
worin R⁹, R¹⁰ jeweils unabhängig voneinander für H oder C₁-C₈-Alkyl stehen, R¹¹ für C₁-C₈ -Alkyl steht, x und y unabhängig voneinander für eine durchschnittliche Zahl von 1 bis 20 stehen und z für eine durchschnittliche Zahl von 2 bis 20 steht, wobei die Endgruppen R* unabhängig voneinander für H oder C₁-C₈ -Alkyl stehen.

8. Multischichtsystem nach mindestens einem der Ansprüche 1 bis 7, **dadurch gekennzeichnet, dass** die Menge an Carbodiimid in der Polyesterschicht (I) 0,2 bis 3 Gew.-%, bezogen auf die Polyesterschicht (I) beträgt.

9. Multischichtsystem nach mindestens einem der Ansprüche 1 bis 7, **dadurch gekennzeichnet, dass** die Menge an Epoxiden in zumindest einer der Polyesterschichten (II) oder (III) 0,1 bis 6 Gew.-%, bezogen auf die Polyesterschicht (II) oder (III) beträgt.

10. Multischichtsystem nach mindestens einem der Ansprüche 1 bis 8, **dadurch gekennzeichnet, dass** die Gewichtsmenge der carbodiimid-haltigen Polyesterschicht (I) 70 Gew.-% bis Gew. 90-%, bezogen auf das Gesamtgewicht des Multischichtsystems (beträgt.

11. Verfahren zur Herstellung eines Multischichtsystems nach einem der Ansprüche 1 bis 10, **dadurch gekennzeichnet, dass** die carbodiimid-haltige Polyesterschicht (I), die gegebenenfalls Epoxid-haltigen Polyesterschichten (II) und (III) zu einem Multischichtsystem coextrudiert werden.

12. Verfahren nach Anspruch 11, **dadurch gekennzeichnet, dass** die Polyesterschicht (I) extrudiert wird und um diese Polyesterschicht (I) die Extrusion der Polyesterschichten (II) und (III) durch Coextrusion erfolgt.

13. Verwendung des Multischichtsystems nach einem der Ansprüche 1 bis 10 zur Herstellung von Verpackungen, Schutzfolien, Klebstofffolien, Solarzellen oder medizinischen Materialien.

14. Solarzelle, umfassend mindestens ein Multischichtsystem nach einem der Ansprüche 1 bis 10.
